# EUROPEAN PATENT SPECIFICATION

(11) **EP 4 286 142 B1**
(45) Date of publication and mention of the grant of the patent: **04.06.2025**
(21) Application number: 23170560.9
(22) Date of filing: 28.04.2023
(51) Int. Cl.: B29C 70/52, B29D 12/00

(54) **SUPPORT FRAME COMPRISING PULTRUDED PRODUCTS MADE OF COMPOSITE MATERIAL**
STÜTZRAHMEN MIT PULTRUDIERTEN PRODUKTEN AUS VERBUNDWERKSTOFF
CADRE DE SUPPORT COMPRENANT DES PRODUITS PULTRUDÉS EN MATÉRIAU COMPOSITE

(30) Priority: 31.05.2022 IT 202200011537
(43) Date of publication of application: 06.12.2023
(73) Proprietor: Top Glass Industries S.p.A., 25128 Brescia BS (IT)
(72) Inventor: BRANCA, Alfonso, 20145 Milano (IT)
(74) Representative: PGA S.p.A.

(56) References cited:
- GB-A- 2 282 096

## Description

### FIELD OF THE INVENTION

The present invention relates to a support framework comprising pultruded products made of composite material. The pultruded product made of composite material and a process as well as an equipment for making the same are described. The support framework, comprising one or more pultruded products in composite material, may be used to make tensile structures or modular support frames, as well as in construction and naval fields to make scaffolding.

### BACKGROUND ART

In the building field and in the naval industry support frames for scaffoldings made in metallic material, for example steel or aluminum, are known. These frames can for example comprise scaffoldings of traditional type, for example used for the manufacture of masonry works, constituted by a plurality of substantially "H"-shaped frames and constrained to each other by means of horizontal beams. Each frame is engaged to a horizontal beam by means of a joint having two shells capable of engaging, by means of pins or bolts, respectively a pillar of the H-shaped frame and a horizontal beam.

Although the scaffoldings described are widely used, the Applicant has observed that the latter have limitations and drawbacks. Such structures are in fact unsuitable for use in corrosive environments such as for example nautical yards or uses in maritime locations. The corrosion of metallic materials in fact causes deterioration from the chemical-physical interaction with the surrounding environment. By effect of the corrosive process, metallic material undergoes a progressive and irreversible decay, of chemical nature, of its technological properties. The damages produced by corrosion are very significant and can cause the replacement of the entire structure or of components thereof or otherwise costs of maintenance aimed at preserving the metal structures used.

For these reasons, the traditional frames, when used in environments corrosive for metals (for example environments close to maritime areas) show a reduced operating reliability, as well as high maintenance costs.

An example of scaffolding, disclosed by GB2282096A, comprises a joint mechanism made of two hinged half-shells with ribs that fit in grooves of a pultruded tubular body, which is used as either an upright or a crossbar in the scaffolding.

### OBJECT OF THE INVENTION

Purpose of the present invention is then to solve at least one of the drawbacks and/or limitations of the previous solutions.

A purpose of the present disclosure is to provide a product made of composite material, for example a tube, free of metallic components.

It is also a purpose of the present disclosure to avoid or minimize the execution of material removal operations for the manufacture of the pultruded products made of composite material.

Another purpose of the present disclosure is to provide pultruded products made of composite material through continuous pultrusion processes.

Another purpose of the present invention is to provide a support frame comprising pultruded products made of composite material both capable of operating without functional problems and in aggressive environments, for example in maritime areas.

It is another purpose of the present invention to provide a support frame comprising pultruded products made of composite material that shows a high reliability grade and that requires a reduced number of maintenance interventions.

These purposes and others, which will be clearer from the following description, are substantially reached by a product made of composite material, a process for the manufacture thereof and a support frame comprising said product according to one or more of the attached.

### SHORT DESCRIPTION OF FIGURES

Some embodiments and some aspects of the invention will be described hereinafter with reference to the attached figures, provided for illustrative purposes only and therefore not limiting, wherein:
- figure 1 is a perspective view of a longitudinal portion of a pultruded product according to the present disclosure,
- figure 1A is a cross-section view according to the section IA-IA of figure 1,
- figure 2 is another perspective view of a longitudinal portion of a variant of a pultruded product according to the present disclosure,
- figure 3 is a schematic view of the outer shape of a longitudinal section taken according to section III-III of the pultruded product of figure 2,
- figures 4, 5 and 5A are schematic views of pultrusion apparatuses for the manufacture of the product according to the present disclosure,
- figures 6 and 7 are schematic views relative to additional elements respectively usable in the pultrusion apparatuses of figures 4, 5 and 5A, for the manufacture of the product according to the present disclosure,
- figure 8 is a schematic view of a support frame, for example usable for scaffoldings, obtainable through use of the pultruded products of figure 1 or figure 3, according to other aspects of the present invention,
- figure 9A is a perspective view of a joint usable in the support frame of figure 8, and
- figure 9B shows a sectioned perspective of the joint of figure 9A,

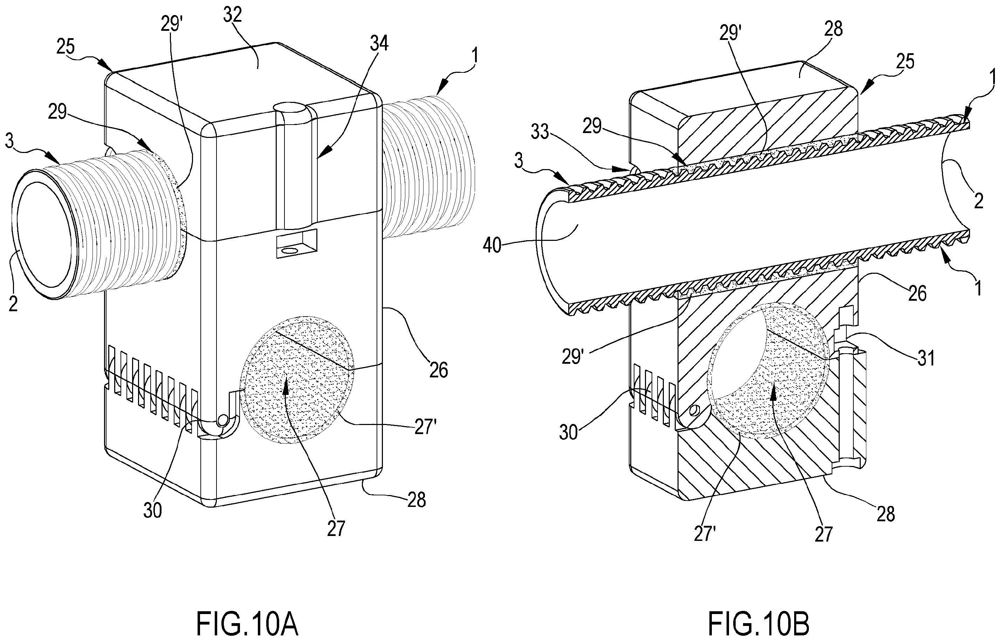

- figure 10A is a perspective view of a variant of a joint usable in the support frame of figure 8, and
- figure 10B shows a sectioned perspective of the joint of figure 10A.

### DEFINITIONS AND CONVENTIONS

It is noted that in the present detailed description corresponding parts shown in the various figures are indicated with the same numerical references. Figures may show the object of the invention through unscaled representations; therefore, parts and components shown in the figures related to the object of the invention may refer exclusively to the schematic representations.

With the terms upstream and downstream used in the description of pultrusion apparatuses it is intended components operating upstream or downstream with respect to other components as well as to steps carried out upstream or downstream with respect to other steps with reference to the feeding direction of the pultruded semifinished product during the process of pultrusion.

In the present description and in the claims the term pultrusion comprises processes wherein the reinforcement materials, as continuous fibers arranged parallel to each other or reinforcing fiber fabrics or in reinforcing fiber mat or braided fibrous materials, are impregnated of resin and moved through a forming head or molding (which may be stationary or movable), downstream thereof operates a pulling system active on the continuous semifinished product exiting the forming head or molding. In other words the term pultrusion is here used for meaning processes which comprise one of the following:
- classical pultrusion,
- pull-winding,
- pull-braiding,
- combination of classical pultrusion with pull-winding,
- combination of classical pultrusion with pull-braiding
- combination of pull-winding with pull-braiding,
- combination of classical pultrusion with pull-winding and pull-braiding.

### DETAILED DESCRIPTION

### Pultruded product made of composite material

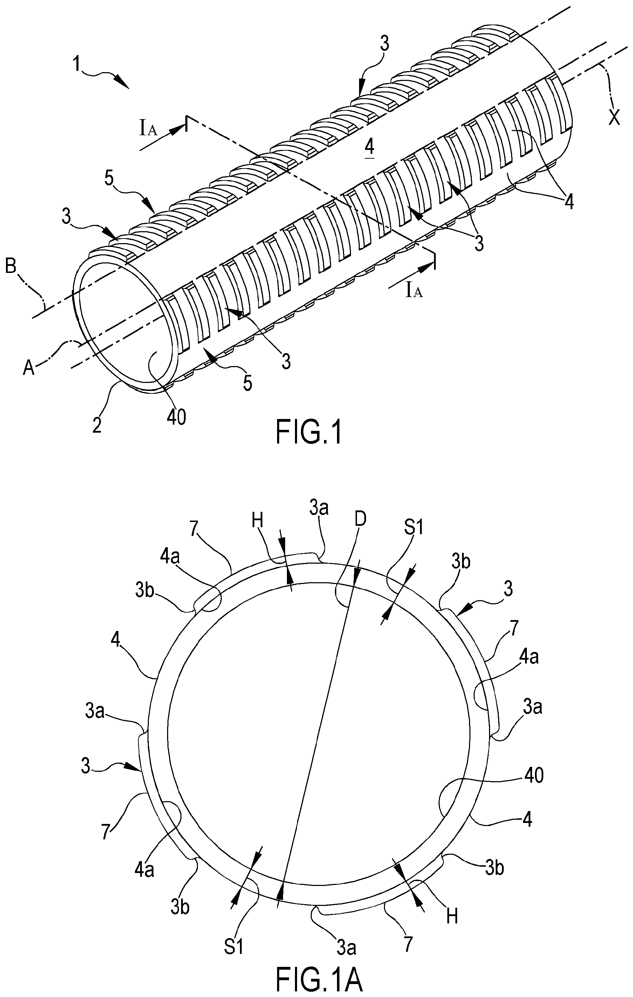

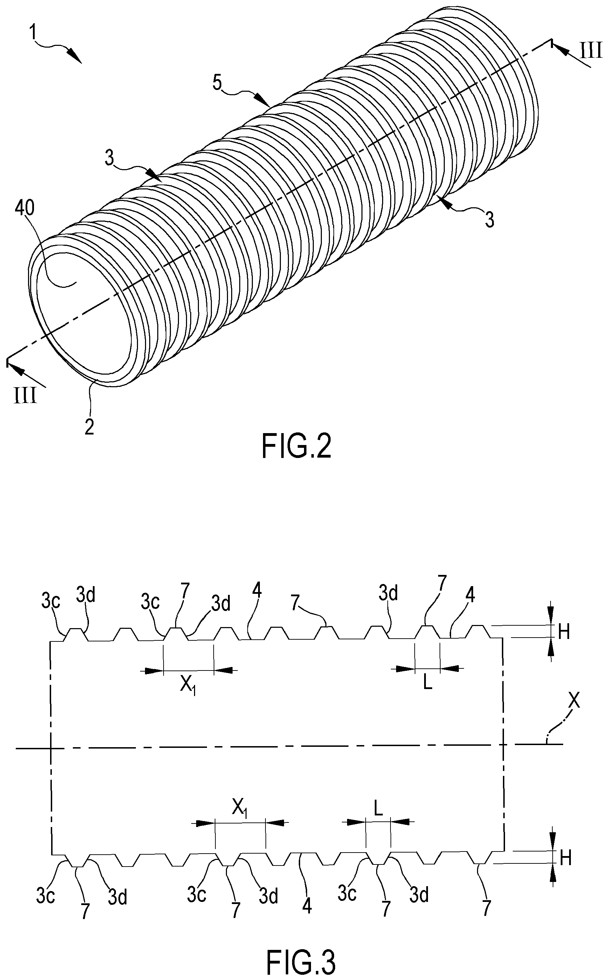

With 1 has been overall indicated a pultruded product made of composite material (in figure 1 and in figure 2 it is shown a longitudinal portion thereof), for example usable for making support frames, such as for example tensile structures, modular support frames or scaffoldings usable in the building and naval field, frames and structures usable in offshore uses for example on oil platforms or similar.

As for example shown in figure 1, the product comprises an elongated body 2 of tubular shape extending along a predetermined prevalent development direction X. In the attached figures it is shown a tubular elongated body of substantially cylindrical shape, however, it is not excluded the manufacture of an elongated body having a prismatic shape with polygonal section, for example square or rectangular.

The elongated body of the product 1 has an inner volume, perimetrically bounded by an optionally cylindrical inner surface 40. The elongated body 2 has furthermore an outer surface comprising a base surface 4 also of optionally cylindrical shape from which emerge projections 3, as it will be better described hereinafter. In the example shown in figure 2, the elongated body 2 has, in cross-section view, a circular shape with closed profile with wall thickness S1 constant along the longitudinal development of the elongated body. It is noted that in this context it is intended for wall thickness, the thickness S1 measured between the inner surface 40 of the elongated body 2 and the base surface 4, which is constant as above mentioned and comprised between 2 mm and 15 mm, optionally comprised between 3 mm and 10 mm.

As mentioned, the outer surface of the elongated body has also one or more projections 3 made in one piece with base surface 4. In particular, the projections 3 emerge from the base surface 4 transversely to the prevalent development direction X of the elongated body 2 and are spaced from each other along the same direction X, i.e. longitudinally to the product 1, from one section (in particular by a smooth section) of the base surface 4.

Each projection 3 has an elongated shape transverse to the prevalent development direction X (see figures 1, 1A and 2). Each projection 3 may be defined by a respective discrete element of limited extension: for example, by observing the profile of a transverse section of the product of figure 1 (see then figure 1A), each projection elongates along part of the outer profile of this transverse section; in fact in the case of figure 1, 1A are provided multiple projections angularly spaced from each other along the outer profile of the same transverse section of the product. Alternatively, the projections 3 may be defined by successive sections of a same continuous element, for example with helical pattern, protruding from the base surface 4 (not shown solution). In another variant (see figure 2) the projections may be different discrete elements projecting from respective portions of the base surface 4 spaced from each other and of annular shape, for example of circular shape, which extend radially around the entire base surface 4 of the elongated body.

As visible in figures 1, 1A and 2, the product 1 may present one or more series 5 of projections 3 positioned next to each other along a direction parallel to the prevalent development direction X of the elongated body 2 and arranged along respective trajectories to each other parallel transverse to the prevalent development direction X. As for example shown in figure 3, each projection may show, in a longitudinal section plane that cuts the projections 3 and is parallel to the prevalent development direction X, a shape defined by:
- a section 4a of the base surface 4,
- a first and a second flank 3c, 3d emerging from the base surface 4 and spaced from each other at the same base wall, and
- a top 7 opposite to the section 4a of the base surface and joining the flanks 3c, 3d.

As previously mentioned, the projections 3 are equidistant to each other, of a pitch X1 measured between two first flanks 3c of two projections 3 of the series 5 longitudinally adjacent to each other. This pitch is for example comprised between 0,5 mm and 30 mm, for example between 3 and 20 mm. In the attached figures, are also shown projections having a predetermined base width L, measured in between the flanks 3c, 3d of a same projection 3, at the base surface. This base width L of each projection may be comprised between 0.5 mm and 10 mm, and for example between 1 and 5 mm. Still with reference to the shape of each projection in longitudinal section (figure 3), the top 7 is at a predetermined height H from the section 4a of the base surface 4 which delimits the projection itself. This height H may be comprised between 0.5 mm and 10 mm, and for example between 1 and 5 mm. However, it is not excluded the manufacture of projections having width, height and pitch different with respect to what is described.

With reference now to the view in a section transverse to the prevalent development direction X of the elongated body 2 (for example figure 1A), the projection 3 has as already said height H with respect to the base surface 4. The height H may be of dimensions proportional to a maximum overall dimension of the cavity of the elongated body 2, for example the height H may be a function of the diameter D of the elongated body 2 (should this defines a cylindrical cavity) delimited by the inner surface 40. The ratio between the height H of each projection 3 and the diameter D may be then comprised between 4 and 30, optionally between 15 and 25. The height of the projection H may also be proportional to the dimensions of the wall thickness S1 of the elongated body 2: for example, the ratio between the wall thickness S1 itself and the height H of each projection 3 may be comprised between 0.5 and 2.0, optionally between 1.0 and 1.5.

As already mentioned the projections 3 may be continuous annular projections or discrete segments: for example in the embodiment shown in figure 1, the projections 3 have a tooth shape extending between a first and a second end 3a, 3b transversely offset from each other on the base surface 4, for example of an angle comprised between 5° and 40°.

Each series 5 of projections may have a plurality of projections 3 arranged next to each other along the prevalent development direction X of the elongated body, wherein the first ends 3a of respective projections 3 are aligned along a direction A parallel to the prevalent development direction X of the elongated body 2, and wherein the second ends 3b of respective projections 3 of the series 5 are aligned along another direction B parallel to the direction A. In other words, each series 5 defines a longitudinal strip laterally delimited by sections of the base surface 4 free from projections.

The product may comprise a plurality of series 5 of projections defining respective longitudinal strips angularly offset from each other. The product may have from 2 to 12 series 5 of projections mutually flanked and angularly equidistant to each other. In particular the strips 5 of projections may be angularly offset from each other of an angle comprised between 5° and 170°, optionally comprised between 10° and 60° (figure 1A), spaced by sections of the base surface 4 free from projections. It is also to be noted that the series 5 of projections are preferably identical to each other and the tooth-shaped discrete projections 3 or the ones continuous of annular shape (figure 2) show, in longitudinal section view, the same geometric characteristics as previously described, to which reference is made. From the point of view of the materials, the composite product comprises synthetic reinforcing fibers 10 such as carbon fibers, glass fibers, aramid fibers, Kevlar, boron fibers or natural fibers such as natural fibers of animal origin, basalt fibers or natural fibers of plant origin. These reinforcing fibers 10 may be in part aligned (and arranged full-length) along a direction parallel to the prevalent development direction X of the elongated body. In addition or alternatively the fibers may be arranged according to cylindrical helix or according to bundles of fibers arranged inclined with respect to the prevalent development direction X. The reinforcing fibers are present in the product in a percentage by weight comprised between the 40% and the 75 %, optionally between the 55% and the 65%, with respect to the total weight of the product. The resin can for example comprise a thermoplastic or thermosetting polymer matrix, among which polyester, polyurethane, vinylester and epoxy resin, but also thermoplastic matrices such as the polybutylene terephthalate (PBT) and the polyethylene terephthalate (PET).

### Pultrusion process

It is also object of the present disclosure a pultrusion process for the manufacture of the product made of composite material 1 previously described and hereinafter claimed. This pultrusion process is carried out using a pultrusion apparatus 50 which, as subsequently detailed, is configured for realizing the transversal projections 3.

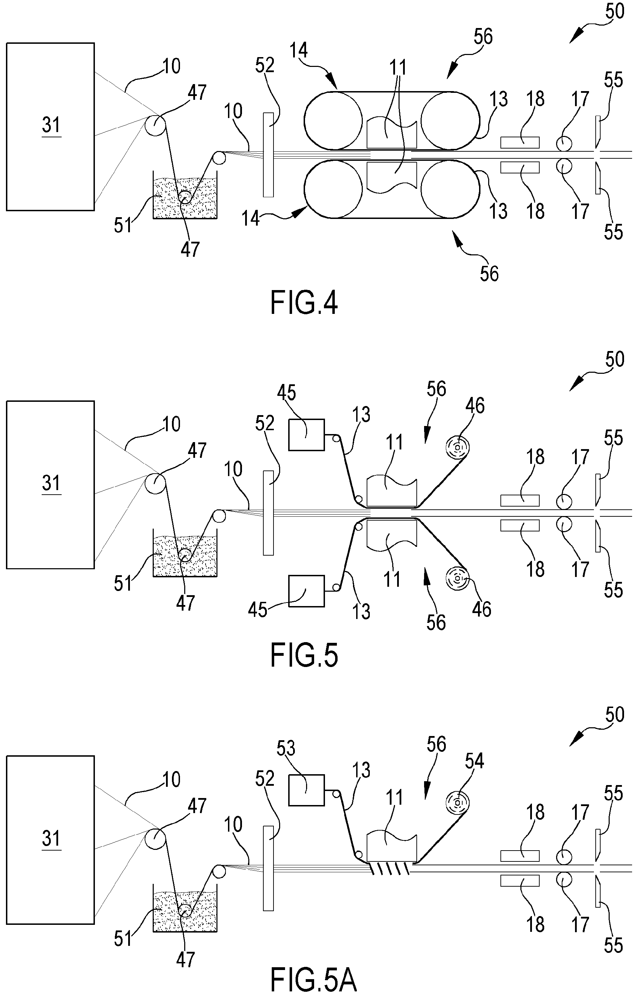

As shown in figures 4, 5 and 5A, the pultrusion process provides the following steps:
- impregnating a reinforcing fiber 10 with synthetic resin in a liquid state, for example in an impregnation station 51 of the apparatus 50 (it is to be noted that the impregnation station may comprise one or more open bath impregnation tanks and/or one or more injection impregnation units),
- moving the impregnated reinforcing fiber 10 towards a forming head or molding 11 of the apparatus 50 having at least one through opening intended to form the product (it is to be noted that although in the attached examples the forming head is stationary, it is not excluded the possibility of conferring mobility to the head itself),
- continuously forming, within the opening of the forming head 11, consecutive portions of the composite product.

The step of moving the reinforcing fiber 10, provides to feed a fiber or a set of reinforcing fibers (which may for example form woven or braided filaments, mat of fiber, or stay in shape of fibers arranged next to each other) 10, for example from one or more spools 31 or other feeding organs of fibrous material of the apparatus 50. It is to be noted that, according to the disclosure, the impregnated fibers, for example with thermosetting resin, may be fed parallel to each other and then unidirectionally arranged in the product in production (classical pultrusion). Alternatively or in combination with the arrangement of unidirectional fibers, impregnated fibers, for example with a thermosetting resin (generally epoxy), may be arranged according to one or more windings (pull-winding) and brought towards the forming head where the resin polymerizes. In other words, the fibers may be arranged parallel to each other or for example according to one or more helixes or in both the ways just described (i.e., part of the fibers arranged parallel to each other along the longitudinal development of the product and part of the fibers arranged inclined for example according to one or more helixes).

According to another alternative the fibers may be fed in form of braided layers (pull-braiding). The braided layers of fibers are impregnated of resin (for example of the above-described type) and sent to the forming head. This alternative may be combined either with the classical pultrusion or with the pultrusion of pull-winding type or with both of them.

The reinforcing fibers 10 impregnated with a quantity of synthetic resin at the station 51 can proceed towards a guiding and positioning station 52 (for example comprising a comb or a member equipped with a plurality of through openings for the opportune positioning of the fibers). The reinforcing fibers 10 may be moved upstream of the forming head 11 by means of rollers 47 of the apparatus 50 and/or pulled thanks to the action of a guiding member 17 positioned downstream of the forming head and still forming part of the pultrusion apparatus. The rollers 47 in cooperation with the guiding or pulling member 17 of the apparatus 50 (or even only the guiding or pulling member 17) are configured for tensioning the fibers and aligning them with respect to the opening of the forming head 11. For this purpose a control system for example comprising at least a control unit for example of digital or analog type, can coordinate the pulling action carried out by the guiding or pulling member 17 as well as, eventually, the movement imposed on the rollers 47 and optionally the braking imposed on the spools 31. The process object of the present disclosure provides the manufacture of the projections 3 through the use of at least an additional element 13 capable of forming continuously the mentioned projections on the outer surface of the product directly during the process of pultrusion: the structure of this additional element 13 will be subsequently detailed. The process initially provides for positioning a section upstream of the additional element 13, defined upstream of the forming head 11, in an area radially outside of reinforcing fibers 10, for example in contact with these latter. In particular, the section upstream of the additional element 13 is positioned at a respective section parallel to the reinforcing fiber 10 itself. The process provides subsequently of moving the additional element 13 synchronously with the reinforcing fibers, across the forming head 11. During this step, the additional element 13 has at least a surface positioned at a perimeter edge delimiting the through opening of the forming head 11; in other words, also during the step of crossing the forming head 11, the additional element 13 can contact the reinforcing fiber impregnated in an area radially outside of the product in production. The continuous product is then formed within the forming head 11, while the fibers and/or the resin are still in contact with the additional element 13. As for example shown in figures 4 and 5, the process may provide the use of two or more additional elements 13, each of them configured for contacting a respective area radially outside of the product in production, for making a respective series 5 of projections 3. It is to be noted that the forming of the product occurs continuously: in other words subsequent portions of the product exiting the forming head are kept in continuous movement. This movement is achieved with the guiding member 17, which may comprise, as shown in the attached figures, two or more rollers counter-rotating or alternatively one or more conveyors.

Subsequently to the step of forming, the process provides a step of solidification of the synthetic resin of the continuous product, which can occur both through exposure to natural light or through exposure to an actinic radiation directed towards the product, for example acheved through ultraviolet lamps 18 of the apparatus 50, for example operating immediately downstream of the forming head 11. It is to be noted that at least a part of the step of solidification can occur also within the forming head.

Subsequently to an at least partial solidification of the resin, for example before or after the complete solidification of the resin, the process may provide a step of separating the additional element 13 from the continuous product according to the modes subsequently described, variable according to the typology of additional element 13 used. The process ends with the execution of a step of cutting the continuous semifinished product obtained by pultrusion carrying out a transversal cut or separation to the reinforcing fiber 10, for example in a cutting station 55 of the apparatus 50, for defining respective composite products 1 of the above-described type, which may be stored and/or conveyed.

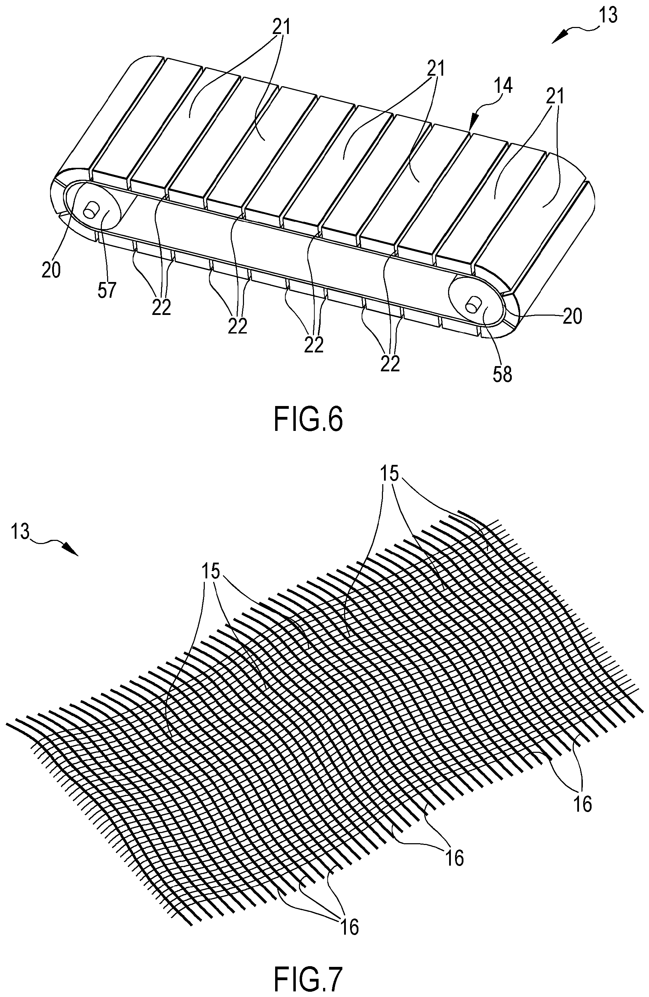

Descending into greater detail, the apparatus 50 comprises as already mentioned one or more additional elements 13, operating at the periphery of the product in production. Each additional element 13 may be defined, in an embodiment for example shown in figures 4 and 6, by a conveyor 14 being part of a positioning device 56 comprising a motor member 57 and a driven member 58 (for example a drive roller and a driven roller) around which it is arranged the conveyor 14 according to a closed loop operational path. The conveyor 14 and then the additional element 13 has an outer surface configured for contacting the reinforcing fiber 10 and forming the projections 3. As shown in detail in figure 6, the conveyor 14 has a base body 20 and a plurality of elements projecting 21 from the base body, to each other different and spaced for defining in interposition between two adjacent protruding elements 21, a channel 22 configured for housing at least partially reinforcing fiber 10 and resin, and then forming a projection 3. The channels 22, at least for a section of the operational path of the conveyor parallel to the reinforcing fibers 10, are transverse to the reinforcing fibers 10 themselves and generally transverse to the direction of pultrusion. The protruding elements 21 and the channels 22 define an outer surface preferably covered seamlessly from a layer in nonstick material, for example silicone-based material, polytetrafluoroethylene (PTFE) or polyvinyl alcohol (PVA). In this embodiment, the step of separating the additional element 13 from the product 1, provides exclusively the movement of the conveyor along its own operational path which deviates angularly with respect to the trajectory followed by the pultruded semifinished product, for allowing the extraction of the projections from channels 22.

In another embodiment for example shown in figures 5 and 7, each additional element 13 is a strip in fibrous material fed by a feeding station 45 of the apparatus 50 which during the process is positioned in an area radially outside of the reinforcing fibers 10 and configured for moving the additional element 13 itself in direction of the forming head 11, for example through the use of one or more conveyors or rollers. As for example shown in the schematic representation of figure 7 (representative of a strip of additional element 13), the fibrous material of the additional element has a first and a second series 15, 16 of fibers or wires transversal to each other. The fibers or the filaments are configured for forming the projections 3 and the base surface 4. In other words, the additional element 13 may be a strip in fabric, wherein warp and weft of the fabric are formed by woven wires (in turn formed by fibers) or directly woven fibers. For allowing the formation of the projections during the process of pultrusion, the fibers of the first series 15 (or the wire which constitutes the warp and weft of the fabric) may have transverse section (or thickness) of overall dimensions lower with respect to an overall dimensions of the transverse section (or thickness) of the fibers of the second series 16 (or of the wire which forms the weft or respectively the warp of the fabric): this allows to precisely form a fabric substantially shaped as in figure 7 where at regular intervals is present a type of protruding rib formed by wires of higher thickness positioned as already said or in direction of the warp or of the weft. Each projection 3 forms then in interposition between adjacent fibers or wires of the second series 16. In this last embodiment, the above mentioned step of separating the additional element 13 itself from the continuous product exiting the forming head 11, provides a step of releasing the fibrous material or fabric from the pultruded semifinished product (also in this case it is imposed downstream of the extrusion head a trajectory on the additional element 13 different to the one followed by the pultruded semifinished product) thanks to a recalling station, which, in figure 5 has been schematized by one or more rollers 46 of the apparatus 50 around which the fabric is wound again. In this second example it is then defined a positioning device 56 of the additional element 13 comprising the station 45 and the recalling station 46 above described.

In another embodiment, schematically represented in figure 5A, the apparatus 50 may comprise one or more feeders 53 each configured for feeding an additional element 13 in form of a continuous wire, for example in plastic material with high mechanical performances and melting point higher than 180°C (for example polyamides may be used as non-limiting such as nylon or kevlar). The wire is fed through the forming head 11 and arranged such as to form one or more loops inclined with respect to the prevalent development direction of the semifinished product in the step of forming in the head itself. For example it may be provided that the apparatus 50 comprises one or more feeders 53 rotating around the ideal feed axis of the product in production in such a way as to form on the periphery of this latter a projection 3 of helical pattern which is embedded (having the additional element 13 in form of wire to cross the forming head) in the resinous matrix. In a variant the additional element 13 in form of wire is left in the final product and then remains embedded in it, while in an alternative variant, the wire may be removed (and wound again on a respective spool 54) yet leaving anyway a cavity and a corresponding ridge of helical shape on the surface of the product in production. In this third example the feeder 53 and the rewinder 54 (the latter if present) define the positioning device 56 of the additional element 13 (in this case filiform with helical pattern) on the continuous semifinished product.

### Support frame

It is furthermore object of the present invention a support frame comprising a plurality of products made of composite material 1 according to the attached claims and/or according to the above indicated description. As previously mentioned, the support frame 100 may for example be a tensile structure or a scaffolding usable in the building and naval field.

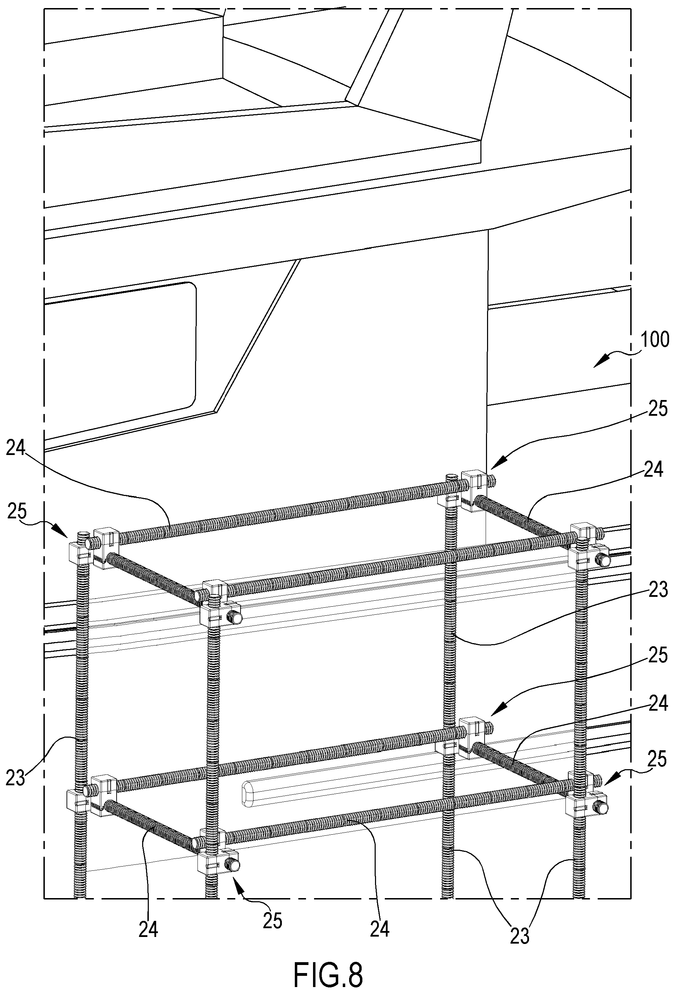

As for example shown in figure 8, the frame 100 has a plurality of pillars 23 made as the composite product previously described, each of which is engaged, through a joint 25, at least to a beam 24 also made as the product 1.

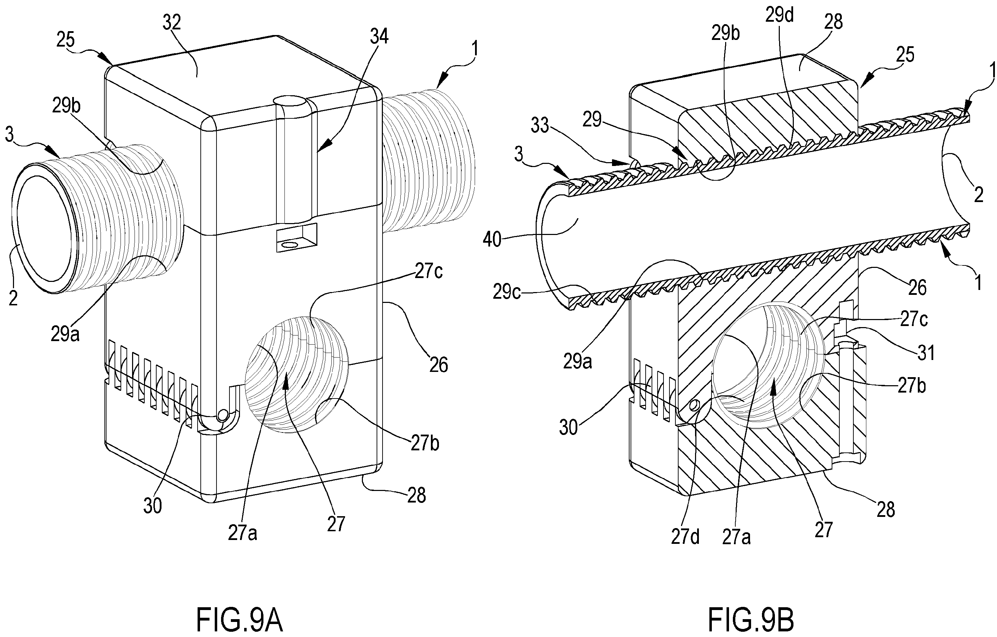

In conditions of use of the frame 100, the pillars 23 are positioned vertically with respect to the ground, while the beams 24 are positioned transverse to the pillars, engaged to the latter at a respective terminal end or of an intermediate area. As previously mentioned, the engagement between pillar 23 and beam 24 is obtained by joints 25 for example of the type shown in detail in figures 9A and 9B. Areas of intersection between a pillar 23 and a beam 24 (for example end areas or intermediate areas) are then engageable to a same joint.

Each joint 25 may have a main body 26 to which is engaged a half-shell 28, mobile relatively to the main body 26 itself between an opening condition and a closing condition. In the opening condition, the half-shell 28 is at least in part spaced from the main body 26 for allowing the insertion of the pillar 23 within a seat 27 defined by the body 36 and by the half-shell 28 (subsequently further described), while in the closing condition, the half-shell 26 is blocked to the main body 26 for preventing at least a relative movement between pillar and joint in axial direction or parallel to the prevalent development direction of the pillar 23.

In the shown embodiment, the main body 26 and the half-shell 28 define respective half-parts of the seat (27) with grooves 27a, 27b alternated to respective protuberances 27c, 27d delimiting the surfaces of each half-part of the seat 27.

In the closing condition between main body 26 and half-shell 28, the grooves 27a and the protuberances 27c associated to the first half-part of the seat 27 show concavity opposite to the concavity of the grooves 27b and protuberances 27d brought by the half-shell 28 and associated to the second half-part of the seat 27. Practically, grooves and protuberances 27a, 27c brought by the main body 26 define a first half-part of the seat 27, while grooves and protuberances 27b, 27d brought by half-shell 28 define a second half-part of the seat 27 facing the first half-part: the two half-parts are facing to each other (in closing condition between main body 26 and half-shell 28) for defining the seat 27. The grooves 27a, 27b are then alternated respectively by protuberances 27c and 27d emerging radially and configurated for engaging to projections 3 of the portion of pillar 23 inserted in the seat 27, for preventing or minimizing a relative axial movement between pillar 23 and joint 25. The seat 27 can show a substantially cylindrical embodiment (with corrugated surface given the presence of grooves spaced by protuberances) and in any case preferably countershaped to the shape of the outer surface of the pillar 23.

As for example shown in figures 9A and 9B, the half-shell 28 is engaged to main body 26 through a hinge 30 and an engaging element 31 operating in position spaced from the hinge 30. The engaging element 31 is configured for rotationally blocking the half-shell 28 to the main body 26 when in closing condition. The engagement element, which may for example comprise one or more screws or bolts or other movable pairing members, is on the other hand configured for being released or removed allowing the rotation of the half-shell around the hinge 30 and then the passage to the opening condition which allows the insertion or the removal of the pillar from the seat 27. In a not shown alternative embodiment it is possible to provide that, instead of the hinge 30, other removable constraining element 31 be provided. In another not shown embodiment it is possible to provide that the hinge and/or the engaging element above described are replaced by rivets or other constraining members that need to be destroyed for allowing the opening of the seat 27.

In another embodiment, the hinge 30 may be made by a plastic hinge i.e. by a portion of deformable material, joined by piece to half-shell 28 and to main body 26, which may then flex or bend for allowing to open or close the seat 27; for example the hinge may comprise a strip of plastic material (for example elastomeric) which connects the half-shell 28 with the main body 26.

The joint 25 furthermore has an auxiliary half-shell 32, mobile relatively to the main body 26 itself between a respective opening condition and a respective closing condition. In the opening condition, the auxiliary half-shell 32 is at least in part spaced from the main body 26 to allow insertion of a portion of the crossbar 24 within an auxiliary seat 29 (analogous to the seat 27 and subsequently further described), while in the closing condition, the auxiliary half-shell 32 is blocked to the main body 26 for closing the auxiliary seat 29 and preventing or minimizing a relative axial movement (i.e., directed along the prevalent development direction of the beam) between beam and joint. It is to be noted that the auxiliary seat 29 is different and spaced from the seat 27, extending transverse (for example perpendicularly) to the latter for allowing engagement of the crossbar 24 transverse to the upright 23. From a structural point of view the auxiliary seat 29 may be identical to the seat 27 above described. In particular, the main body 26 has auxiliary grooves 29a alternated by auxiliary protuberances 29c, while the auxiliary half-shell 32 has grooves 29b alternated to respective protuberances 29d.

In the closing condition between main body 26 and auxiliary half-shell 32, the auxiliary grooves 29a and the protuberances 29c associated to the main body 26 show concavity opposite to the concavity of the grooves 29b and protuberances 29d brought by the auxiliary half-shell 32. Practically, auxiliary grooves and auxiliary protuberances 29a, 29c of the main body 26 define a respective first half-part of the auxiliary seat 29, while grooves and protuberances 29b, 29d of the auxiliary half-shell 32 define a respective second half-part of the auxiliary seat 29 facing the first half-part: the two half-parts facing each other (in closing condition between main body 26 and auxiliary half-shell 32) define the auxiliary seat 29. The auxiliary grooves 29a of the main body and the grooves 29b of the auxiliary half-shell 32 are then alternated respectively by the auxiliary protuberances 29c of the main body and by the protuberances 29d of the auxiliary half-shell 32 emerging radially and configurated for engaging to the projections 3 of the portion of crossbar 24 inserted in the auxiliary seat 29, for preventing or minimizing a relative axial movement between crossbar 24 and joint 25. The auxiliary seat 29 may have a substantially cylindrical shape (provided with a corrugated surface, given the presence of grooves spaced by protuberances) and in any case preferably countershaped to the outer surface of the crossbar 24.

In a non-shown variant the main body 26 presents (instead of the grooves above described) a first half-part of said seat 27 covered by a layer in soft material 27'; analogously in this embodiment the half-shell 28 (instead of the grooves) has a second half-part of said seat 27 covered by a respective layer of soft material 27'; the soft material of each of said layers has deformability to the compression higher with respect to the one of the material forming the main body of the joint and higher with respect to the one of the material forming said one or more projections present on each pultruded product. In this way, when the joint is in closing condition of the seat 27, the projections can penetrate in the soft material positioned on the surface of the joint and axially anchor the pultruded product (crossbar or upright) to the seat 27 and then to the joint. In quite a similar way, according to this embodiment, the main body 26 may also present the first half-part of the auxiliary seat 29 covered by a layer in soft material 29', and the auxiliary half-shell 32 may present the second half-part of the auxiliary seat 29 covered by a respective layer of soft material 29'. Also in this case the layer of soft material of each of said layers replaces the grooves and has deformability to compression higher with respect to the one of the material forming the main body and higher with respect to the one of the material forming said one or more projections present on each pultruded product. For example, the soft material may be elastomeric material, silicone material or other. For example, a polyurethane elastomeric material may be used.

The above-described layers of soft material are for example continuous layers with constant thickness. Alternatively a prevalent part of each layer has constant thickness.

According to another aspect, the thickness of each layer is (at least for a prevalent part of the development of the layer on the respective half-shell) equal to or higher than the height H of each projection from the base surface 4. In this way the projection/s may (when the joint is tightened and the seats 27 and 29 closed) penetrate in the soft material and then obtain an efficient axial blocking. For example, the thickness of each layer of soft material may be comprised between 0.5 mm and 15 mm. The alternative wherein are provided the layers of soft material allows an efficient blocking also in case of projection or projections having geometric dimensions that are not very precise or machining tolerances that are not too extreme.

As for example shown in figures 9A and 9B, the auxiliary half-shell 32 is engaged to the main body 26 through a respective hinge 33 and a respective engaging element 34 operating in a position spaced from the hinge 33. The engaging element 34 is configured for rotationally blocking the auxiliary half-shell 32 to the main body 26 in the closing condition. The engagement element, which may for example comprise one or more screws or bolts or other removable coupling organs, is on the other hand configured for being loosened or removed allowing rotation of the auxiliary half-shell 32 around the hinge 33 and then passage to the opening condition which allows insertion or removal of the crossbar 24 from the auxiliary seat 29. In a non-shown alternative it is possible to provide that, instead of the hinge 33, another removable constraining element analogous to the engaging element 34 be provided. In another non-shown alternative, it is possible to provide that the hinge and/or the engaging element above described be replaced by rivets or other constraining organs that need to be destroyed for allowing opening of the auxiliary seat 29.

In another variant (analogous to what was discussed for the hinge 30), the hinge 33 may be made by a plastic hinge i.e., by a portion of material deformable that can then flex or bend for allowing to open and close the auxiliary seat 29; for example the hinge may comprise a strip of plastic material (for example elastomeric) which connects the auxiliary half-shell 32 with the main body 26.

From a constructive point of view it is possible to make the joint in various ways. For example the half-shell 28, the auxiliary half-shell 32 and the main body may be made by molding, for example injection molding and then connected with the hinges 30, 33 and the related engagement elements.

Alternatively the half-shell 28, the main body 26 and the auxiliary half-shell 32 may be made by molding (for example injection molding) making, directly during the step of molding, the mentioned plastic hinges 30 and 33. With regard to the alternative wherein the seats 27 and 29 are covered with soft material, this may be co-molded on the surface of the seats themselves in such a way as to form a joint entirely obtained by molding (for example injection molding) except obviously for the need of one or more engagement elements for the tightening of the seats 27 and 9.

As to the materials, the main body, the half-shell 28 and the auxiliary half-shell 32 may be made in high resistance and stiffness material such as for example nylon reinforced with fibers (for example, glass or carbon fibers). On the contrary, as already mentioned, the layer of soft material (if present) may be made using material with deformability (in particular to compression) considerably higher with respect to the one of the material used for the main body 26 and the half-shells 28, 32: for example a polyurethane elastomeric material may be used for each layer of soft material.

The construction of the support frame 100 shown in figure 8 follows arrangement and engagement of a plurality of uprights 23 to respective crossbars 24. This step provides the coupling of at least an upright 23 to at least a joint 25 through insertion of the upright within the seat 27 and of block of the half-shell 28 to the main body 26 of the joint by means of screws, pins or rivets. As previously described, the insertion of the desired portion of upright within the seat 27 occurs after the movement of the half-shell 28 from the closing position to the opening position. With the subsequent closure movement of the half-shell 28, the upright 23 may be blocked to the main body of the joint 25.

The process provides furthermore engagement of a crossbar 24 to the same joint 25 through insertion of the desired portion of the crossbar 24 within the auxiliary seat 29. By blocking the auxiliary half-shell 32 to the main body of the joint 25, blocking of the crossbar with respect to the auxiliary seat 29 of the joint 25 is obtained. Practically, the insertion of the desired portion of the crossbar 24 within the auxiliary seat 29 occurs in a way similar to the insertion of the desired portion of upright 23 in the seat 27 of the same joint.

The process provides then the repetition of the above indicated steps based on the number of uprights and crossbars to be transversely joined to each other, defining a configuration of the support frame for example of the type shown in figure 8. The support frame may furthermore be equipped with panels (not shown in the attached figures), engaged upwards of the crossbar 24 positioned on a same horizontal plane, which define respective walking planes for a user defining thus a scaffolding that uses as support the frame formed with the uprights and the crossbars above described.

## Claims

1. Support frame comprising:
- a plurality of uprights (23),
- a plurality of crossbars (24) engageable to said uprights (23),
- a plurality of joints (25) each of which configured for engaging with each other an upright (23) to a respective crossbar (24),
wherein each of the uprights (23) and/or each of the crossbars (24) is a pultruded product of composite material, said product comprising an elongated body (2) extending along a prevalent development direction (X) and delimited by an outer surface comprising:
- a base surface (4) and
- one or more projections (3) emerging from a base surface (4) and arranged transversely to the prevalent development direction (X) of the elongated body (2), said projections or successive sections of the same projection being spaced from each other in a direction parallel to the prevalent development direction (X),
wherein each joint (25) includes:
- at least one seat (27) intended to receive a portion of the upright,
- a main body (26),
- a half-shell (28) engageable to the main body (26) and movable with respect to the latter at least between:
∘ an open condition wherein the half-shell (28) is at least partly spaced from the main body (26),
∘ a closed condition wherein the half-shell (28) is locked to the main body (26) and defines the seat (27) which is configured for receiving said portion of the upright and to prevent at least one relative movement between upright (23) and joint (25) along a direction parallel to a prevalent development direction of the upright (23),
**characterized in that** the main body (26) has a first half-part of said seat (27) at least partially covered by a layer made of soft material, and/or wherein the half-shell (28) has a second half-part of said seat (27) at least partially covered by a respective layer of soft material, said soft material of at least one or each of said layers having compressive deformability greater than that of the material forming the main body and greater than that of the material forming said one or more projections on each pultruded product.

2. Frame according to claim 1, wherein in each pultruded product, each projection (3) has an elongated shape transverse to the prevalent development direction (X), wherein said one or more projections (3) are formed by successive sections of the same continuous element projecting from the base surface (4) or by distinct discrete elements, projecting from the base surface (4) and spaced from each other; and
wherein the elongated body (2) has a tubular shape;
optionally wherein the elongated body (2) has a hollow cylindrical shape wherein the base surface (4) and a lateral surface delimiting an inner volume of the elongated body both have a cylindrical shape with a circular profile.

3. Frame according to any one of the preceding claims, wherein each pultruded product comprises at least one series (5) of projections (3) positioned next to each other along a direction parallel to the prevalent development direction (X) of the elongated body (2), wherein each projection (3) of said series (5) has according to a view perpendicular to the prevalent development direction:
- an annular shape, optionally an annular shape with a circular outline, radially extending around the entire base surface (4) of the elongated body, or
- a tooth shape extending between a first and a second end (3a, 3b) transversely offset from each other on the base surface (4), optionally angularly offset from each other by an angle comprised between 5° and 40°;
wherein in the alternative where said projections have a tooth shape, the first ends (3a) of respective projections (3) of each series (5) are aligned along a direction (A) parallel to the prevalent development direction (X) of the elongated body (2), and wherein the second ends (3b) of respective projections (3) of the same series (5) are aligned along a further direction (B) parallel to the prevalent development direction (X) of the elongated body (2);
wherein the projections (3) of each series (5) are arranged parallel to each other transversely to the prevalent development direction (X) of the elongated body (2);
wherein the projections (3) of each series (5) are equidistant from each other along a direction parallel to the prevalent development direction (X) of the elongated body (2);
in particular wherein the product comprises a plurality of series (5) of projections arranged next to each other along longitudinal strips of the base surface (4) and alternated with strips of the base surface having no projections, optionally wherein there are from two to twelve series of projections mutually flanked and wherein each of said series (5) of projections is offset with respect to an adjacent series, optionally wherein each of said series (5) of projections is offset with respect to an adjacent series by an angle comprised between 5° and 170°, optionally between and 10° and 60°, even more optionally wherein said series (5) of projections are identical to each other.

4. Frame according to any one of the preceding claims, wherein in each pultruded product, considering a longitudinal section plane that cuts the projection and is parallel to the prevalent development direction (X) of the pultruded product itself, each projection is delimited by:
- a section (4a) of the base surface (4),
- a first and a second flank (3c, 3d) emerging from the base surface (4) and spaced from each other at the same base surface by a base width (L) of the projection, and
- a top (7) opposite to the section of the base surface and joining said flanks (3c, 3d);
optionally wherein the base width (L) of each projection is comprised between 0.5 mm and 10 mm, and wherein said top (7) has a height (H) from the base surface (4), comprised between 0.5 mm and 10 mm;
and wherein, in a longitudinal section plane parallel to the prevalent development direction (X), the first flanks (3c) of respective adjacent projections (3) of the same series (5) are spaced from each other, at the base surface (4) of the elongated body (2), by a pitch (X1) comprised between 0.5 mm and 30 mm.

5. Frame according to any one of the preceding claims, wherein each pultruded product has the elongated body (2) having in cross-section a closed profile outline with wall thickness (S1) measured between an inner surface (40) of the elongated body (2) and said base surface comprised between 2 mm and 15 mm, optionally comprised between 3 mm and 10 mm, wherein said wall thickness (S1) is optionally constant along the longitudinal development of the elongated body;
and even more optionally wherein the ratio between the wall thickness (S1) of the elongated body (2) and the height (H) of each projection (3) is comprised between 0.5 and 2.0, optionally comprised between 1.0 and 1.5.

6. Frame according to any one of the preceding claims, wherein the seat (27) is countershaped to a portion of the upright (23) on which the one or more projections (3) are defined,
optionally wherein the seat and the upright both have substantially circular profile outline.

7. Frame according to any one of the preceding claims, wherein the main body (26) has a first half-part of said seat (27) delimited at least in part by a plurality of grooves (27a) alternated by respective protuberances (27c), and wherein the half-shell (28) has a second half-part of said seat (27) delimited at least in part by a plurality of grooves (27b) alternated by respective protuberances (27d); and
wherein, in the closed condition between the main body (26) and the half-shell (28), the grooves (27a) and the protuberances (27c) associated with the first half-part of the seat (27) have concavity opposite to the concavity of the grooves (27b) and of the protuberances (27d) associated with the second half-part of the seat (27).

8. Frame according to any one of the preceding claims , wherein each joint (25) has:
- at least one hinge (30) at which the half-shell (28) is rotationally engaged to the main body (26), optionally wherein said hinge is a plastic hinge joined in one piece to the half-shell (28) and to the main body (26),
- an engagement element (31) spaced from the hinge (30) and configured for blocking, in the closed condition of the main body (26) and the half-shell (28), the movement of the half-shell (28) with respect to the main body (26),
wherein said engagement element (31) is coupled, optionally removably, to the main body (26) of the shell by means of one or more fasteners, e.g., pins, bolts or rivets.

9. Frame according to any one of the preceding claims , wherein each joint (25) includes at least one auxiliary seat (29) intended to receive a portion of the crossbar (24);
wherein the auxiliary seat (29) is countershaped to a portion of the crossbar (24) on which the one or more projections (3) are defined, optionally wherein the auxiliary seat and the crossbar both have substantially circular outline profiles; and
wherein the seat (27) and the auxiliary seat (29) are spaced apart and develop axially along respective directions transversal or orthogonal to each other.

10. Frame according to the preceding claim, wherein the joint (25) has an auxiliary half-shell (32) distinct from the half-shell (28) and engageable to the main body (26), wherein said auxiliary half-shell (32) is movable with respect to the main body between:
- an opening condition wherein the auxiliary half-shell (32) is at least partly spaced from the main body (26),
- a locking condition wherein the auxiliary half-shell (32) is locked to the main body (26) and defines the auxiliary seat (29), which is configured for receiving said portion of the crossbar and to prevent at least one relative movement between the crossbar (24) and the joint (25) along a direction parallel to a prevalent development direction of the crossbar (24).

11. Frame according to the preceding claim, wherein the main body (26) has a first half-part of said auxiliary seat (29) at least partially delimited by a plurality of auxiliary grooves (29a) alternated by respective auxiliary protuberances (29c), and wherein the auxiliary half-shell (32) has a second half-part of said auxiliary seat (29) at least partially delimited by a plurality of auxiliary grooves (29b) alternated by respective auxiliary protuberances (29d); and
wherein, in the closed condition between the main body (26) and the auxiliary half-shell (32), the auxiliary grooves (29a) and the auxiliary protuberances (29c) associated to the first half-part of the auxiliary seat (29) and defined on the main body (26) have concavity opposite to the concavity of the auxiliary grooves (29b) and of the auxiliary protuberances (29d) associated to the second half-part of the auxiliary seat (29) and defined on the auxiliary half-shell (32).

12. Frame according to claim 10 or 11, wherein the main body (26) has a first half-part of said auxiliary seat (29) at least partially covered by a layer of soft material, and/or wherein the auxiliary half-shell (32) has a second half-part of said auxiliary seat (29) at least partially covered by a respective layer of soft material, said soft material of at least one or each of said layers having compressive deformability greater than that of the material forming the main body and greater than that of the material forming said one or more projections on each pultruded product.

13. Frame according to any one of the preceding claims from 10 to 12, wherein each joint has:
- at least one hinge (33) at which the auxiliary half-shell (32) is rotationally engaged to the main body (26), optionally wherein said hinge (33) is a plastic hinge joined in one piece to the auxiliary half-shell (29) and to the main body (26),
- an engagement element (34) spaced from the hinge (33) and configured for blocking, in the closed condition of the main body (26) and the auxiliary half-shell (32), the movement of the auxiliary half-shell (32) with respect to the main body (26),
wherein said engagement element (34) is coupled, optionally removably, to the main body (26) of the shell by means of one or more fasteners, e.g., pins, bolts or rivets.

14. Frame according to any one of the preceding claims in combination with claim 4, wherein:
- the thickness of at least a preponderant portion of each of said layers of soft material with which the seat (27) is at least partially covered has a height equal to or greater than the height (H) of the top of each projection from the base surface (4), optionally wherein the thickness of said layers of soft material associated with the seat (27) is comprised between 0.5 mm and 15 mm;
and/or
- the thickness of at least a preponderant portion of each of said layers of soft material with which the auxiliary seat (29) is at least partially covered has a height equal to or greater than the height (H) of the top of each projection from the base surface (4), optionally wherein the thickness of said layers of soft material associated with the seat (27) is comprised between 0.5 mm and 15 mm.

## Patentansprüche

1. Stützrahmen, umfassend:
- eine Mehrzahl von Pfosten (23),
- eine Mehrzahl von Querstangen (24), die mit den Pfosten (23) in Eingriff gebracht werden können,
- eine Mehrzahl von Verbindungen (25), von denen jede so konfiguriert ist, dass sie einen Pfosten (23) mit einer entsprechenden Querstange (24) in Eingriff bringt,
wobei jeder der Pfosten (23) und/oder jede der Querstangen (24) ein pultrudiertes Produkt aus Verbundmaterial ist, wobei das Produkt einen länglichen Körper (2) umfasst, der sich entlang einer vorherrschenden Entwicklungsrichtung (X) erstreckt und durch eine Außenfläche begrenzt ist, die umfasst:
- eine Grundfläche (4) und
- einen oder mehrere Vorsprünge (3), die von einer Grundfläche (4) ausgehen und quer zur vorherrschenden Entwicklungsrichtung (X) des länglichen Körpers (2) angeordnet sind, wobei die Vorsprünge oder aufeinanderfolgende Abschnitte desselben Vorsprungs in einer Richtung parallel zur vorherrschenden Entwicklungsrichtung (X) voneinander beabstandet sind,
wobei jede Verbindung (25) umfasst:
- mindestens einen Sitz (27), der dazu bestimmt ist, einen Abschnitt des Pfostens aufzunehmen,
- einen Hauptkörper (26),
- eine Halbschale (28), die mit dem Hauptkörper (26) in Eingriff gebracht werden kann und in Bezug auf den letzteren zumindest zwischen folgenden Zuständen beweglich ist:
∘ einem geöffneten Zustand, in dem die Halbschale (28) zumindest teilweise von dem Hauptkörper beabstandet ist,
∘ einem geschlossenen Zustand, in dem die Halbschale (28) mit dem Hauptkörper (26) verriegelt ist und den Sitz (27) definiert, der so konfiguriert ist, dass er den Abschnitt des Pfostens aufnimmt und mindestens eine relative Bewegung zwischen dem Pfosten (23) und der Verbindung (25) entlang einer Richtung parallel zu einer vorherrschenden Entwicklungsrichtung des Pfostens (23) verhindert,
**dadurch gekennzeichnet, dass** der Hauptkörper (26) einen ersten Halbteil des Sitzes (27) aufweist, der zumindest teilweise von einer Schicht aus weichem Material bedeckt ist, und/oder wobei die Halbschale (28) einen zweiten Halbteil des Sitzes (27) aufweist, der zumindest teilweise von einer entsprechenden Schicht aus weichem Material bedeckt ist, wobei das weiche Material von zumindest einer oder jeder der Schichten eine Druckverformbarkeit aufweist, die größer ist als die des Materials, das den Hauptkörper bildet, und größer als die des Materials, das den einen oder die mehreren Vorsprünge auf jedem pultrudierten Produkt bildet.

2. Rahmen nach Anspruch 1, wobei in jedem pultrudierten Produkt jeder Vorsprung (3) eine längliche Form quer zur vorherrschenden Entwicklungsrichtung (X) aufweist, wobei der eine oder die mehreren Vorsprünge (3) durch aufeinanderfolgende Abschnitte desselben kontinuierlichen Elements, die von der Grundfläche (4) vorstehen, oder durch verschiedene diskrete Elemente, die von der Grundfläche (4) vorstehen und voneinander beabstandet sind, gebildet sind; und
wobei der längliche Körper (2) eine röhrenförmige Form aufweist;
optional, wobei der längliche Körper (2) eine hohlzylindrische Form hat, wobei die Grundfläche (4) und eine Seitenfläche, die ein Innenvolumen des länglichen Körpers begrenzt, beide eine zylindrische Form mit einem kreisförmigen Profil aufweisen.

3. Rahmen nach einem der vorhergehenden Ansprüche, wobei jedes pultrudierte Produkt mindestens eine Reihe (5) von Vorsprüngen (3) umfasst, die nebeneinander entlang einer Richtung parallel zur vorherrschenden Entwicklungsrichtung (X) des länglichen Körpers (2) angeordnet sind, wobei jeder Vorsprung (3) der Reihe (5) in einer Ansicht senkrecht zur vorherrschenden Entwicklungsrichtung Folgendes aufweist:
- eine Ringform, optional eine Ringform mit kreisförmigem Umriss, die sich radial um die gesamte Grundfläche (4) des länglichen Körpers erstreckt, oder
- eine Zahnform, die sich zwischen einem ersten und einem zweiten Ende (3a, 3b) erstreckt, die auf der Grundfläche (4) quer zueinander versetzt sind, optional winkelmäßig um einen Winkel zwischen 5° und 40° zueinander versetzt;
wobei in der Alternative, in der die Vorsprünge eine Zahnform haben, die ersten Enden (3a) der jeweiligen Vorsprünge (3) jeder Reihe (5) entlang einer Richtung (A) parallel zu der vorherrschenden Entwicklungsrichtung (X) des länglichen Körpers (2) ausgerichtet sind, und wobei die zweiten Enden (3b) der jeweiligen Vorsprünge (3) derselben Reihe (5) entlang einer weiteren Richtung (B) parallel zu der vorherrschenden Entwicklungsrichtung (X) des länglichen Körpers (2) ausgerichtet sind;
wobei die Vorsprünge (3) jeder Reihe (5) parallel zueinander quer zur vorherrschenden Entwicklungsrichtung (X) des länglichen Körpers (2) angeordnet sind;
wobei die Vorsprünge (3) jeder Reihe (5) entlang einer Richtung parallel zur vorherrschenden Entwicklungsrichtung (X) des länglichen Körpers (2) gleich weit voneinander entfernt sind;
insbesondere wobei das Produkt eine Mehrzahl von Reihen (5) von Vorsprüngen umfasst, die nebeneinander entlang von Längsstreifen der Grundfläche (4) angeordnet sind und sich mit Streifen der Grundfläche, die keine Vorsprünge aufweisen, abwechseln, wobei optional zwei bis zwölf Reihen von Vorsprüngen vorhanden sind, die gegenseitig flankiert sind, und wobei jede der Reihen (5) von Vorsprüngen in Bezug auf eine benachbarte Reihe versetzt ist, wobei optional jede der Reihen (5) von Vorsprüngen gegenüber einer benachbarten Reihe um einen Winkel zwischen 5° und 170°, optional zwischen 10° und 60°, versetzt ist, wobei noch mehr optional die Reihen (5) von Vorsprüngen identisch zueinander sind.

4. Rahmen nach einem der vorhergehenden Ansprüche, wobei in jedem pultrudierten Produkt, unter Berücksichtigung einer Längsschnittebene, die den Vorsprung schneidet und parallel zur vorherrschenden Entwicklungsrichtung (X) des pultrudierten Produkts selbst ist, jeder Vorsprung begrenzt wird durch:
- einen Abschnitt (4a) der Grundfläche (4),
- eine erste und eine zweite Flanke (3c, 3d), die von der Grundfläche (4) ausgehen und auf derselben Grundfläche durch eine Grundbreite (L) des Vorsprungs voneinander beabstandet sind, und
- ein Oberteil (7), das dem Abschnitt der Grundfläche gegenüberliegt und die Flanken (3c, 3d) verbindet;
wobei optional die Grundbreite (L) jedes Vorsprungs zwischen 0,5 mm und 10 mm liegt, und wobei das Oberteil (7) eine Höhe (H) von der Grundfläche (4) zwischen 0,5 mm und 10 mm aufweist;
und wobei in einer Längsschnittebene parallel zur vorherrschenden Entwicklungsrichtung (X) die ersten Flanken (3c) jeweiliger benachbarter Vorsprünge (3) der gleichen Reihe (5) an der Grundfläche (4) des länglichen Körpers (2) um einen Abstand (X1) zwischen 0,5 mm und 30 mm voneinander beabstandet sind.

5. Rahmen nach einem der vorhergehenden Ansprüche, wobei jedes pultrudierte Produkt den länglichen Körper (2) aufweist, der im Querschnitt ein geschlossenes Umrissprofil mit einer Wanddicke (S1), gemessen zwischen einer Innenfläche (40) des länglichen Körpers (2) und der Grundfläche, zwischen 2 mm und 15 mm, optional zwischen 3 mm und 10 mm, aufweist, wobei die Wanddicke (S1) optional entlang der Längsentwicklung des länglichen Körpers konstant ist;
und noch mehr optional, wobei das Verhältnis zwischen der Wanddicke (S1) des länglichen Körpers (2) und der Höhe (H) jedes Vorsprungs (3) zwischen 0,5 und 2,0 liegt, optional zwischen 1,0 und 1,5.

6. Rahmen nach einem der vorhergehenden Ansprüche, wobei der Sitz (27) eine Gegenform zu einem Abschnitt des Pfostens (23) aufweist, an dem der eine oder die mehreren Vorsprünge (3) ausgebildet sind,
optional wobei der Sitz und der Pfosten beide ein im wesentlichen kreisförmiges Umrissprofil aufweisen.

7. Rahmen nach einem der vorhergehenden Ansprüche, wobei der Hauptkörper (26) einen ersten Halbteil des Sitzes (27) aufweist, der zumindest teilweise durch eine Mehrzahl von Nuten (27a) begrenzt ist, die sich mit entsprechenden Vorwölbungen (27c) abwechseln, und wobei die Halbschale (28) einen zweiten Halbteil des Sitzes (27) aufweist, der zumindest teilweise durch eine Mehrzahl von Nuten (27b) begrenzt ist, die sich mit entsprechenden Vorwölbungen (27d) abwechseln; und
wobei in dem geschlossenen Zustand zwischen dem Hauptkörper (26) und der Halbschale (28) die Nuten (27a) und die Vorwölbungen (27c), die dem ersten Halbteil des Sitzes (27) zugeordnet sind, eine Konkavität aufweisen, die der Konkavität der Nuten (27b) und der Vorwölbungen (27d), die dem zweiten Halbteil des Sitzes (27) zugeordnet sind, entgegengesetzt ist.

8. Rahmen nach einem der vorhergehenden Ansprüche, wobei jede Verbindung folgendes (25) aufweist:
- mindestens ein Scharnier (30), an dem die Halbschale (28) drehbar mit dem Hauptkörper (26) in Eingriff steht, wobei es sich bei dem Scharnier optional um ein Kunststoffscharnier handelt, das einstückig mit der Halbschale (28) und dem Hauptkörper (26) verbunden ist,
- ein Eingriffselement (31), das von dem Scharnier (30) beabstandet und so konfiguriert ist, dass es im geschlossenen Zustand des Hauptkörpers (26) und der Halbschale (28) die Bewegung der Halbschale (28) in Bezug auf den Hauptkörper (26) blockiert,
wobei das Eingriffselement (31) mit dem Hauptkörper (26) der Schale mittels eines oder mehrerer Befestigungselemente, z.B. Stifte, Bolzen oder Nieten, gekoppelt ist, optional lösbar.

9. Rahmen nach einem der vorhergehenden Ansprüche, wobei jede Verbindung (25) mindestens einen Hilfssitz (29) aufweist, der zur Aufnahme eines Abschnitts der Querstange (24) bestimmt ist;
wobei der Hilfssitz (29) entgegengesetzt zu einem Abschnitt des Querbalkens (24) geformt ist, auf dem der eine oder die mehreren Vorsprünge (3) definiert sind, wobei optional der Hilfssitz und der Querbalken beide im Wesentlichen kreisförmige Umrissprofile aufweisen; und
wobei der Sitz (27) und der Hilfssitz (29) voneinander beabstandet sind und sich axial entlang entsprechender Richtungen quer oder orthogonal zueinander entwickeln.

10. Rahmen nach dem vorhergehenden Anspruch, wobei die Verbindung (25) eine Hilfshalbschale (32) aufweist, die sich von der Halbschale (28) unterscheidet und mit dem Hauptkörper (26) in Eingriff gebracht werden kann, wobei die Hilfshalbschale (32) in Bezug auf den Hauptkörper beweglich ist zwischen:
- einem Öffnungszustand, in dem die Hilfshalbschale (32) zumindest teilweise von dem Hauptkörper (26) beabstandet ist,
- einen Verriegelungszustand, in dem die Hilfshalbschale (32) mit dem Hauptkörper (26) verriegelt ist und den Hilfssitz (29) definiert, der so konfiguriert ist, dass er den Abschnitt der Querstange aufnimmt und mindestens eine Relativbewegung zwischen der Querstange (24) und der Verbindung (25) entlang einer Richtung parallel zu einer vorherrschenden Entwicklungsrichtung der Querstange (24) verhindert.

11. Rahmen nach dem vorhergehenden Anspruch, wobei der Hauptkörper (26) einen ersten Halbteil des Hilfssitzes (29) aufweist, der zumindest teilweise durch eine Mehrzahl von Hilfsnuten (29a) begrenzt ist, die sich mit entsprechenden Hilfsvorwölbungen (29c) abwechseln, und wobei die Hilfshalbschale (32) einen zweiten Halbteil des Hilfssitzes (29) aufweist, der zumindest teilweise durch eine Mehrzahl von Hilfsnuten (29b) begrenzt ist, die sich mit entsprechenden Hilfsvorwölbungen (29d) abwechseln; und
wobei im geschlossenen Zustand zwischen dem Hauptkörper (26) und der Hilfshalbschale (32) die Hilfsnuten (29a) und die Hilfsvorwölbungen (29c), die dem ersten Halbteil des Hilfssitzes (29) zugeordnet und am Hauptkörper (26) definiert sind, eine Konkavität aufweisen, die der Konkavität der Hilfsnuten (29b) und der Hilfsvorwölbungen (29d), die dem zweiten Halbteil des Hilfssitzes (29) zugeordnet und an der Hilfshalbschale (32) definiert sind, entgegengesetzt ist.

12. Rahmen nach Anspruch 10 oder 11, wobei der Hauptkörper (26) einen ersten Halbteil des Hilfssitzes (29) aufweist, der zumindest teilweise von einer Schicht aus weichem Material bedeckt ist, und/oder wobei die Hilfshalbschale (32) einen zweiten Halbteil des Hilfssitzes (29) aufweist, der zumindest teilweise von einer entsprechenden Schicht aus weichem Material bedeckt ist, wobei das weiche Material mindestens einer oder jeder der Schichten eine Druckverformbarkeit aufweist, die größer ist als die des Materials, das den Hauptkörper bildet, und größer als die des Materials, das den einen oder die mehreren Vorsprünge auf jedem pultrudierten Produkt bildet.

13. Rahmen nach einem der vorhergehenden Ansprüche 10 bis 12, wobei jede Verbindung Folgendes aufweist:
- mindestens ein Scharnier (33), an dem die Hilfshalbschale (32) mit dem Hauptkörper (26) drehbar in Eingriff steht, wobei das Scharnier (33) optional ein Kunststoffscharnier ist, das einstückig mit der Hilfshalbschale (29) und dem Hauptkörper (26) verbunden ist,
- ein Eingriffselement (34), das von dem Scharnier (33) beabstandet und so konfiguriert ist, dass es in dem geschlossenen Zustand des Hauptkörpers (26) und der Hilfshalbschale (32) die Bewegung der Hilfshalbschale (32) in Bezug auf den Hauptkörper (26) blockiert,
wobei das Eingriffselement (34) mit dem Hauptkörper (26) der Schale mittels eines oder mehrerer Befestigungselemente, z.B. Stifte, Bolzen oder Nieten, gekoppelt ist, optional lösbar.

14. Rahmen nach einem der vorhergehenden Ansprüche in Verbindung mit Anspruch 4, wobei:
- die Dicke zumindest eines überwiegenden Teils jeder der Schichten aus weichem Material, mit denen der Sitz (27) zumindest teilweise bedeckt ist, eine Höhe aufweist, die gleich oder größer ist als die Höhe (H) der Oberseite jedes Vorsprungs von der Grundfläche (4), wobei die Dicke der Schichten aus weichem Material, die dem Sitz (27) zugeordnet sind, optional zwischen 0,5 mm und 15 mm liegt; und/oder
- die Dicke zumindest eines überwiegenden Teils jeder der Schichten aus weichem Material, mit denen der Hilfssitz (29) zumindest teilweise bedeckt ist, eine Höhe aufweist, die gleich oder größer ist als die Höhe (H) der Oberseite jedes Vorsprungs von der Grundfläche (4), wobei die Dicke der Schichten aus weichem Material, die dem Sitz (27) zugeordnet sind, optional zwischen 0,5 mm und 15 mm liegt.

## Revendications

1. Structure de soutien comprenant :
- une pluralité de montants (23),
- une pluralité de barres transversales (24) pouvant être engagées au niveau desdits montants (23),
- une pluralité de joints (25) chacune configurée pour engager l'une avec l'autre un montant (23) à une barre transversale (24) respective,
dans laquelle chacun des montants (23) et/ou chacune des barres transversales (24) est un produit de pultrusion de matériau composite, ledit produit comprenant un corps allongé (2) s'étendant le long d'un sens de développement prévalent (X) et délimité par une surface externe comprenant :
- une surface de base (4) et
- une ou plusieurs projections (3) émergeant d'une surface de base (4) et agencées transversalement au sens de développement prévalent (X) du corps allongé (2), lesdites projections ou sections successives de la même projection étant espacées l'une de l'autre dans un sens parallèle au sens de développement prévalent (X),
dans laquelle chaque joint (25) inclut :
- au moins une assise (27) prévue pour recevoir une portion du montant,
- un corps principal (26),
- une demi-enveloppe (28) pouvant être engagée au niveau du corps principal (26) et mobile par rapport à ce dernier au moins entre :
∘ une condition ouverte dans laquelle la demi-enveloppe (28) est au moins partiellement espacée du corps principal (26),
∘ une condition fermée dans laquelle la demi-enveloppe (28) est verrouillée au niveau du corps principal (26) et définit l'assise (27) qui est configurée pour recevoir ladite portion du montant et pour empêcher au moins un mouvement relatif entre montant (23) et joint (25) le long d'un sens parallèle à un sens de développement prévalent du montant (23),
**caractérisée en ce que** le corps principal (26) présente une première demi-partie de ladite assise (27) au moins partiellement recouverte d'une couche constituée de matériau souple, et/ou dans laquelle la demi-enveloppe (28) présente une seconde demi-partie de ladite assise (27) recouverte au moins partiellement d'une couche respective de matériau souple, ledit matériau souple d'au moins l'une ou chacune desdites couches ayant une aptitude à la déformation en compression supérieure à celle du matériau formant le corps principal et supérieure à celle du matériau formant lesdites une ou plusieurs projections sur chaque produit de pultrusion.

2. Structure selon la revendication 1, dans laquelle dans chaque produit de pultrusion, chaque projection (3) présente une forme allongée transversale au sens de développement prévalent (X), dans laquelle lesdites une ou plusieurs projections (3) sont formées de sections successives du même élément de projection continue depuis la surface de base (4) ou par des éléments discrets distincts, se projetant depuis la surface de base (4) et espacées l'une de l'autre ; et
dans laquelle le corps allongé (2) présente une forme tubulaire ;
éventuellement dans laquelle le corps allongé (2) présente une forme cylindrique creuse dans laquelle la surface de base (4) et une surface latérale délimitant un volume interne du corps allongé présentent toutes les deux une forme cylindrique avec un profil circulaire.

3. Structure selon l'une quelconque des revendications précédentes, dans laquelle chaque produit de pultrusion comprend au moins une série (5) de projections (3) positionnées proches de chaque autre le long d'un sens parallèle au sens de développement prévalent (X) du corps allongé (2), dans laquelle chaque projection (3) de ladite série (5) présente selon une vue perpendiculaire au sens de développement prévalent :
- une forme annulaire, éventuellement une forme annulaire avec un contour circulaire, s'étendant radialement autour de la surface de base (4) entière du corps allongé, ou
- une forme de dent s'étendant entre une première et une seconde extrémité (3a, 3b) transversalement décalées l'une de l'autre sur la surface de base (4), éventuellement décalées de manière angulaire l'une de l'autre d'un angle compris entre 5° et 40° ;
dans laquelle dans l'alternative où lesdites projections présentent une forme de dent, les premières extrémités (3a) des projections (3) respectives de chaque série (5) sont alignées le long d'un sens (A) parallèle au sens de développement prévalent (X) du corps allongé (2), et dans laquelle les secondes extrémités (3b) des projections (3) respectives de la même série (5) sont alignées le long d'un sens supplémentaire (B) parallèle au sens de développement prévalent (X) du corps allongé (2) ;
dans laquelle les projections (3) de chaque série (5) sont agencées parallèles l'une à l'autre transversalement au sens de développement prévalent (X) du corps allongé (2) ;
dans laquelle les projections (3) de chaque série (5) sont équidistantes l'une de l'autre le long d'un sens parallèle au sens de développement prévalent (X) du corps allongé (2) ;
en particulier dans laquelle le produit comprend une pluralité de séries (5) de projections agencées proches l'une de l'autre le long de bandes longitudinales de la surface de base (4) et alternées avec des bandes de la surface de base ne présentant pas de projections, éventuellement dans laquelle il existe de deux à douze séries de projections mutuellement flanquées et dans laquelle chacune desdites séries (5) de projections est décalée par rapport à une série adjacente, éventuellement dans laquelle chacune desdites séries (5) de projections est décalée par rapport à une série adjacente d'un angle compris entre 5° et 170°, éventuellement entre 10° et 60°, même plus facultativement dans laquelle lesdites séries (5) de projections sont identiques les unes par rapport aux autres.

4. Structure selon l'une quelconque des revendications précédentes, dans laquelle dans chaque produit de pultrusion, en prenant en considération un plan de section longitudinale qui coupe la projection et qui est parallèle au sens de développement prévalent (X) du produit de pultrusion lui-même, chaque projection est délimitée par :
- une section (4a) de la surface de base (4),
- un premier et un second flanc (3c, 3d) émergeant de la surface de base (4) et espacés l'un par rapport à l'autre au niveau de la même surface de base d'une largeur de base (L) de la projection, et
- un sommet (7) opposé à la section de la surface de base et joignant lesdits flancs (3c, 3d) ;
éventuellement dans laquelle la largeur de base (L) de chaque projection est comprise entre 0,5 mm et 10 mm, et dans laquelle ledit sommet (7) présente une hauteur (H) depuis la surface de base (4), comprise entre 0,5 mm et 10 mm ;
et dans laquelle, dans un plan de section longitudinale parallèle au sens de développement prévalent (X), les premiers flancs (3c) des projections (3) adjacentes respectives de la même série (5) sont espacés l'un de l'autre, au niveau de la surface de base (4) du corps allongé (2), d'un pas (X1) compris entre 0,5 mm et 30 mm.

5. Structure selon l'une quelconque des revendications précédentes, dans laquelle chaque produit de pultrusion présente le corps allongé (2) ayant en section transversale un contour de profil fermé avec une épaisseur de paroi (S1) mesurée entre une surface interne (40) du corps allongé (2) et ladite surface de base comprise entre 2 mm et 15 mm, éventuellement comprise entre 3 mm et 10 mm, dans laquelle ladite épaisseur de paroi (S1) est facultativement constante le long du développement longitudinal du corps allongé ;
et même plus facultativement dans laquelle le ratio entre l'épaisseur de paroi (S1) du corps allongé (2) et la hauteur (H) de chaque projection (3) est compris entre 0,5 et 2,0, éventuellement compris entre 1,0 et 1,5.

6. Structure selon l'une quelconque des revendications précédentes, dans laquelle l'assise (27) présente une contreforme par rapport à une portion du montant (23) sur laquelle la une ou plusieurs projections (3) sont définies,
facultativement dans laquelle l'assise et le montant présentent tous les deux un contour de profil sensiblement circulaire.

7. Structure selon l'une quelconque des revendications précédentes, dans laquelle le corps principal (26) présente une première demi-partie de ladite assise (27) délimitée au moins en partie par une pluralité de rainures (27a) alternées par des protubérances (27c) respectives, et dans laquelle la demi-enveloppe (28) présente une seconde demi-partie de ladite assise (27) délimitée au moins en partie par une pluralité de rainures (27b) alternées par des protubérances (27d) respectives ; et
dans laquelle, dans la condition fermée entre le corps principal (26) et la demi-enveloppe (28), les rainures (27a) et les protubérances (27c) associées à la première demi-partie de l'assise (27) présentent une concavité opposée à la concavité des rainures (27b) et des protubérances (27d) associées à la seconde demi-partie de l'assise (27).

8. Structure selon l'une quelconque des revendications précédentes, dans laquelle chaque joint (25) présente :
- au moins une charnière (30) au niveau de laquelle la demi-enveloppe (28) est engagée de manière à pouvoir tourner au niveau du corps principal (26), facultativement dans laquelle ladite charnière est une charnière en matière plastique jointe en une pièce à la demi-enveloppe (28) et au corps principal (26),
- un élément d'engagement (31) espacé de la charnière (30) et configuré pour bloquer, dans la condition fermée du corps principal (26) et de la demi-enveloppe (28), le mouvement de la demi-enveloppe (28) par rapport au corps principal (26),
dans laquelle ledit élément d'engagement (31) est accouplé, éventuellement de manière amovible, au corps principal (26) de l'enveloppe à l'aide d'une ou plusieurs attaches, par exemple, goupilles, boulons ou rivets.

9. Structure selon l'une quelconque des revendications précédentes, dans laquelle chaque joint (25) inclut au moins une assise auxiliaire (29) prévue pour recevoir une portion de la barre transversale (24) ;
dans laquelle l'assise auxiliaire (29) est en contreforme vis-à-vis d'une portion de la barre transversale (24) sur laquelle la une ou plusieurs projections (3) sont définies, éventuellement dans laquelle l'assise auxiliaire et la barre transversale présentent toutes les deux des profils à contour sensiblement circulaire ; et
dans laquelle l'assise (27) et l'assise auxiliaire (29) sont espacées l'une de l'autre et se développent axialement le long de sens respectifs transversaux ou orthogonaux l'un par rapport à l'autre.

10. Structure selon la revendication précédente, dans laquelle le joint (25) présente une demi-enveloppe auxiliaire (32) distincte de la demi-enveloppe (28) et pouvant être engagée au niveau du corps principal (26), dans laquelle ladite demi-enveloppe auxiliaire (32) est mobile par rapport au corps principal entre :
- une condition d'ouverture dans laquelle la demi-enveloppe auxiliaire (32) est au moins partiellement espacée du corps principal (26),
- une condition de verrouillage dans laquelle la demi-enveloppe auxiliaire (32) est verrouillée au corps principal (26) et définit l'assise auxiliaire (29), qui est configurée pour recevoir ladite portion de la barre transversale et pour empêcher au moins un mouvement relatif entre la barre transversale (24) et le joint (25) le long d'un sens parallèle au sens de développement prévalent de la barre transversale (24).

11. Structure selon la revendication précédente, dans laquelle le corps principal (26) présente une première demi-partie de ladite assise auxiliaire (29) délimitée au moins partiellement par une pluralité de rainures auxiliaires (29a) alternées par des protubérances auxiliaires (29c) respectives, et dans laquelle la demi-enveloppe auxiliaire (32) présente une seconde demi-partie de ladite assise auxiliaire (29) délimitée au moins partiellement par une pluralité de rainures auxiliaires (29b) alternées par des protubérances auxiliaires (29d) respectives ; et
dans laquelle, dans la condition fermée entre le corps principal (26) et la demi-enveloppe auxiliaire (32), les rainures auxiliaires (29a) et les protubérances auxiliaires (29c) associées à la première demi-partie de l'assise auxiliaire (29) et définies sur le corps principal (26) présentent une concavité opposée à la concavité des rainures auxiliaires (29b) et des protubérances auxiliaires (29d) associées à la seconde demi-partie de l'assise auxiliaire (29) et définies sur la demi-enveloppe auxiliaire (32).

12. Structure selon la revendication 10 ou 11, dans laquelle le corps principal (26) présente une première demi-partie de ladite assise auxiliaire (29) recouverte au moins partiellement d'une couche de matériau souple, et/ou dans laquelle la demi-enveloppe auxiliaire (32) présente une seconde demi-partie de ladite assise auxiliaire (29) recouverte au moins partiellement d'une couche respective de matériau souple, ledit matériau souple d'au moins l'une ou de chacune desdites couches ayant une aptitude à la déformation en compression supérieure à celle du matériau formant le corps principal et supérieure à celle du matériau formant lesdites une ou plusieurs projections sur chaque produit de pultrusion.

13. Structure selon l'une quelconque des revendications précédentes de 10 à 12, dans laquelle chaque joint présente :
- au moins une charnière (33) au niveau de laquelle la demi-enveloppe auxiliaire (32) est engagée de manière à pouvoir tourner au corps principal (26), éventuellement dans laquelle ladite charnière (33) est une charnière en matière plastique jointe en une pièce à la demi-enveloppe auxiliaire (29) et au corps principal (26),
- un élément d'engagement (34) espacé de la charnière (33) et configuré pour bloquer, dans la condition fermée du corps principal (26) et de la demi-enveloppe auxiliaire (32), le mouvement de la demi-enveloppe auxiliaire (32) par rapport au corps principal (26),
dans laquelle ledit élément d'engagement (34) est accouplé, éventuellement de manière amovible, au corps principal (26) de l'enveloppe à l'aide d'une ou plusieurs attaches, par exemple, goupilles, boulons ou rivets.

14. Structure selon l'une quelconque des revendications précédentes en combinaison avec la revendication 4, dans laquelle :
- l'épaisseur d'au moins une portion prépondérante de chacune desdites couches de matériau souple dont l'assise (27) est au moins partiellement recouverte présente une hauteur supérieure ou égale à la hauteur (H) du sommet de chaque projection depuis la surface de base (4), éventuellement dans laquelle l'épaisseur desdites couches de matériau souple associées à l'assise (27) est comprise entre 0,5 mm et 15 mm ; et/ou
- l'épaisseur d'au moins une portion prépondérante de chacune desdites couches de matériau souple dont l'assise auxiliaire (29) est au moins partiellement recouverte présente une hauteur supérieure ou égale à la hauteur (H) du sommet de chaque projection depuis la surface de base (4), éventuellement dans laquelle l'épaisseur desdites couches de matériau souple associées à l'assise (27) est comprise entre 0,5 mm et 15 mm.
